# EUROPEAN PATENT APPLICATION

(11) **EP 1 271 791 A2**
(43) Date of publication of application: **02.01.2003**
(21) Application number: 02254238.5
(22) Date of filing: 18.06.2002
(51) Int. Cl.: H04B 1/20, B60Q 1/26

(54) **Trainable receiver for remote control of a vehicle actuator**

(30) Priority: 18.06.2001 US 883750
(71) Applicant: Johnson Controls Technology Company, Plymouth, Michigan 48170 (US)
(72) Inventor: Geerlings, Steven L., Zeeland, Michigan 49464 (US); Suman, Michael J., Holland, Michigan 49424 (US)
(74) Representative: Dealtry, Brian

(57) **Abstract**

A receiver for use in a vehicle for communicating between an actuator and a remote device includes an antenna and a controller. The actuator is disposed within the vehicle for controlling the operation of a vehicle feature. The antenna receives a wireless signal generated by the remote device and including a control command. The controller is coupled to the antenna. The controller is configured to enter a training mode of operation wherein the controller polls a plurality of wireless frequencies to detect the wireless signal. The controller is configured to receive and interpret the control command on the wireless signal. The controller is further configured to communicate the control command to the actuator for execution.

## Description

### BACKGROUND OF THE INVENTION

The present specification relates to a trainable radio frequency (RF) transceiver, and more particularly to a trainable transceiver that is trained to communicate with a remote control unit, switching device, or operator interface located in a vehicle.

In today's automotive aftermarket, consumers are demanding more electronic functions and capability. Consumers desire trouble-free installation and access to controls and other devices that may not have been fitted to their vehicle at the factory. Electronic devices, especially control devices, are relatively difficult to install in a vehicle in the aftermarket because of the required electrical and communications interfaces to the control and electrical infrastructure of the vehicle. For example, to install an additional control device such as a switch unit, a highly trained technician must place the switch unit in a fixed position within the trim of the vehicle and possibly penetrate the trim to fasten the required electrical and communications wires/connections. What is needed is a system that eliminates such electrical wires/connections by using the RF capabilities of a trainable transceiver installed in a vehicle to communicate with a remote control unit.

Trainable transceivers are an increasingly popular convenience included in many vehicles to allow communication with numerous isolated devices such as garage door openers and home alarm systems. Such transceivers are typically permanently located in a vehicle and are powered by a vehicle's battery. Normally, the trainable transceiver capabilities are used to learn the function of a stand-alone remote control device, such as a garage door remote control, and then mimic the function of the remote control device. These trainable transceivers typically initiate control actions in isolated devices such as the previously mentioned garage door. Accordingly, the remote control device can be replaced with the trainable transceiver.

What is needed is a system that utilizes a trainable transceiver trained to receive control commands from a remote control device. Further, what is needed is a system wherein the control commands received by the trainable transmitter are communicated to a vehicle control infrastructure, via an automotive network connection, to be executed by devices connected to the vehicle control infrastructure.

Further still, what is needed is a system that provides the ability to easily integrate additional controls to a vehicle without requiring physical electrical connections.

Further yet, what is needed is a trainable RF transceiver that may be trained to communicate, via an RF signal with remote control devices, in such a manner that the remote control devices initiate control commands to the control infrastructure in a vehicle.

The teachings hereinbelow extend to those embodiments which fall within the scope of the appended claims, regardless of whether they accomplish one or more of the above-mentioned needs.

### SUMMARY OF THE INVENTION

According to one exemplary embodiment, a receiver for use in a vehicle for communicating between an actuator and a remote device includes an antenna and controller. The actuator is disposed within the vehicle for controlling the operation of a vehicle feature. The antenna receives a wireless signal, the wireless signal generated by the remote device and including a control command. The controller is coupled to the antenna and configured to enter a training mode of operation wherein the controller polls a plurality of wireless frequencies to detect the wireless signal. The controller is configured to receive and interpret the control command on the wireless signal and to communicate the control command to the actuator for execution.

According to another exemplary embodiment, a method of controlling an actuator within a vehicle with an RF signal from a remote device, the RF signal having a control command, includes polling a plurality of frequencies to locate a frequency of the RF signal. The method further includes receiving the control command from the remote control device via the RF signal and providing the control command to the actuator disposed within the vehicle for controlling the operation of a vehicle feature.

According to yet another exemplary embodiment, an RF control system in a vehicle includes a trainable transceiver, an antenna, and a remote device. The trainable transceiver includes a memory, the memory storing at least one communication protocol, and a communications interface to a control bus of the vehicle. The antenna is electrically coupled to the trainable transceiver. The remote device generates an RF signal, and the trainable transceiver receives the RF signal. The trainable transceiver enters a training mode of operation wherein the receiver polls a plurality of RF frequencies to detect the RF signal and establish communications with the remote device. The trainable transceiver receives a control command from the remote device via the RF signal and transfers the control command to the control bus of the vehicle to be executed.

### BRIEF DESCRIPTION OF THE DRAWINGS

The various advantages of the embodiments herein will become apparent to those skilled in the art after reading the following specification and by reference to the drawings, in which:

FIG 1 is a fragmentary perspective view of a vehicle interior having an overhead console for housing a trainable transceiver, according to an exemplary embodiment;

FIG. 2 is a perspective view of the trainable transceiver, according to an exemplary embodiment;

FIG. 3 is a perspective view of a visor incorporating the trainable transceiver, according to an exemplary embodiment;

FIG. 4 is a perspective view of a mirror assembly incorporating the trainable transceiver, according to an exemplary embodiment;

FIGS. 5a - 5e are electrical circuit diagrams in schematic form of the transceiver circuitry, according to an exemplary embodiment; and

FIG. 6 is a flow diagram of the train-time algorithm, according to an exemplary embodiment.

### DETAILED DESCRIPTION OF EXEMPLARY EMBODIMENTS

The following description of the exemplary embodiments is merely exemplary in nature and is in no way intended to limit the invention or its uses. Moreover, the following description, while depicting a trainable transceiver designed to operate with a remote control device, is intended to adequately teach one skilled in the art to make and use the trainable transceiver with any similar type RF transmission and receiving applications.

One exemplary embodiment uses a trainable transceiver to receive RF control commands from remote devices, such as stand-alone switch units equipped with RF transmitters, eliminating wires and connections normally needed for the addition of such devices. The trainable transceiver of this exemplary embodiment includes an antenna, a communications integrated circuit (IC), a microcontroller/microprocessor, memory, an automotive network interface, and software to interpret signals from a remote control device. The trainable transceiver is configured for RF communication with a remote control unit, switching device, or operator interface in a vehicle, and is configured to transfer control commands from such a remote control unit to control systems in a vehicle, via a control interface, such as a serial interface or a multiplexed automotive network. Furthermore, aftermarket automotive remote control units may be easily integrated to the vehicle to communicate, via RF transmissions, to the trainable transceiver of this exemplary embodiment.

The trainable transceiver of this exemplary embodiment has two modes of operation: a learning or training mode and an operating mode. To initiate the learning or training mode, the operator pushes a button. At or about the same time, the operator initiates a similar training mode on a remote control unit or switching device. The remote control device repeatedly transmits a frame of information, via an RF transmission, containing communication protocol information and other information needed for communication between the transceiver and the remote control device. The trainable transceiver polls various frequencies searching for the frame of information transmitted by the remote control device. After the trainable transceiver has found/received the frame of information, flags are set in software indicating that a remote control device is present with a specific communications protocol. The trainable transceiver will then be placed into an operation mode where it monitors the communication frequency of the remote control device for control commands. The remote control device may then be operated according to its control function with the trainable transceiver receiving the control commands from the remote control device. The trainable transceiver in this arrangement is the slave device to the remote control device and transfers control commands to a serial bus or multiplex bus in the vehicle electrical control infrastructure to be executed by other control devices communicating with the transceiver.

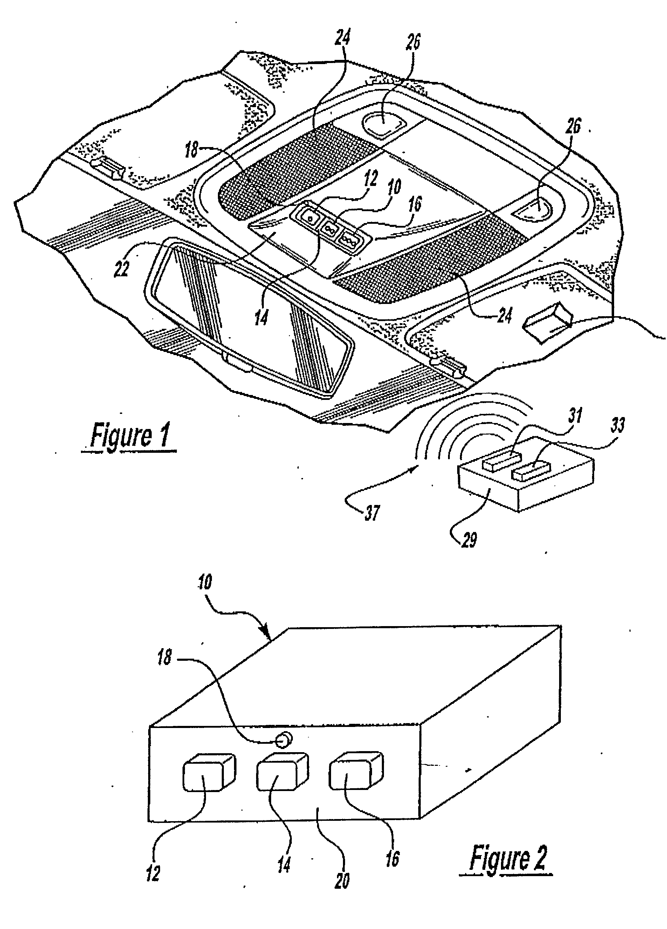

FIGs. 1 and 2 show a trainable transceiver 10 according to an exemplary embodiment. Trainable transceiver 10 includes a plurality of pushbutton switches 12, 14, and 16, a light emitting diode (LED) 18, an electrical circuit board and associated circuits (not shown) that may be mounted in a housing 20. Trainable transceiver housing 20 is preferably of appropriate dimensions for mounting within a vehicle accessory such as an overhead console 22, as shown in FIG. 1. In the configuration shown in FIG. 1, trainable transceiver 10 includes electrical conductors coupled to the vehicle's electrical system for receiving power from the vehicle's battery and to a communications bus for communicating with other vehicle components via CCD, J1850, CAN, PALMNET or other similar automotive network communications standards. The overhead console 22 includes other accessories such as map reading lamps 24 controlled by switches 26. It may also include an electronic compass and display (not shown).

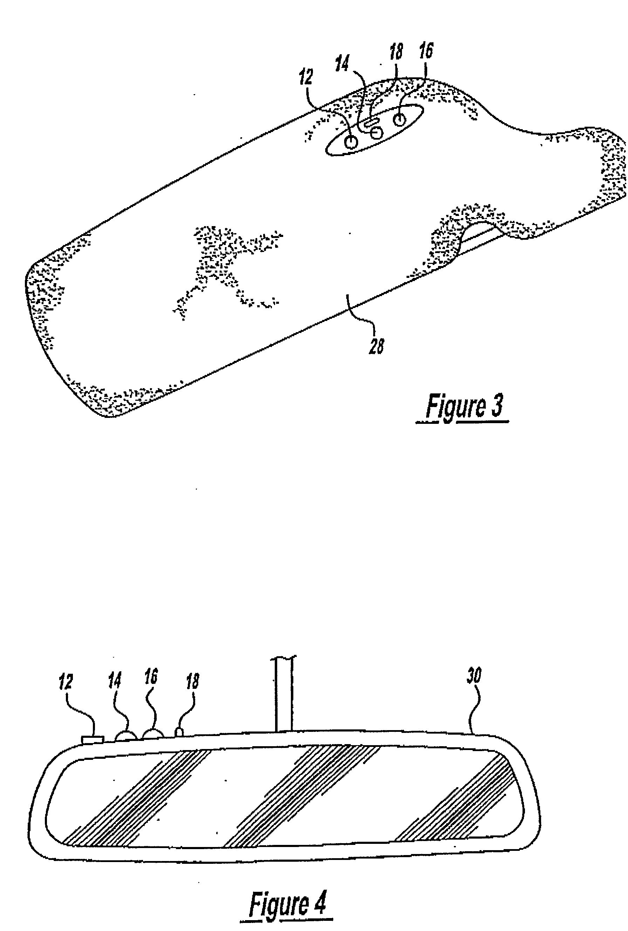

Trainable transceiver 10 may alternatively be permanently incorporated in a vehicle accessory such as a visor 28 (FIG. 3) or a rearview mirror assembly 30 (FIG. 4). Although trainable transceiver 10 has been shown as incorporated in a visor and mirror assembly and removably located in an overhead console compartment, trainable transceiver 10 could be permanently or removably located in the vehicle's instrument panel or any other suitable location within the vehicle's interior.

Referring to FIG. 1, a remote control device or switching unit 29 is shown communicating with trainable transceiver 10 via a wireless transmission 37 (e.g., radio frequency, infrared radiation, etc.). Remote control device 29 does not require hardwired electrical connections for power or communications, as it is battery powered and communicates wirelessly. Remote control device 29 includes pushbuttons or switches 31 and 33 for activation of the RF transmission during a training mode for trainable transceiver 10 and for transmission of a control command to trainable transceiver 10.

Remote control device 29 may be configured in any shape useful for attachment to a vehicle interior. For example, remote control device 29 may be configured to fit into a recess or slot of an interior door or instrument panel with an exterior surface conforming to the shape, look, and feel of the interior door or instrument panel. Accordingly, remote control device 29 can seamlessly mesh with the vehicle interior. For vehicle interiors lacking interior recesses or slots, remote control device 29 may be configured to attach to any surface on the interior of the vehicle with Velcro, tape, adhesives, or mechanical fasteners.

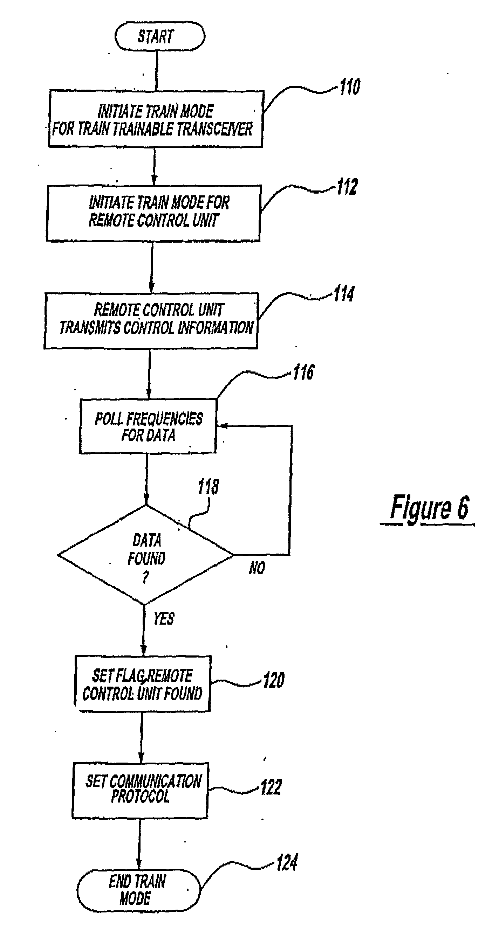

FIG. 6 is a flow chart detailing an exemplary training mode for trainable transceiver 10 and remote control device 29. As discussed previously, trainable transceiver 10 has two modes of operation, a learning or training mode and an operating mode. To initiate the learning or training mode at block 110, the operator pushes a button 12, 14, or 16 on transceiver 10. At or about the same time, at block 112, the operator initiates a similar training mode on the remote control device 29 by pushing buttons 31 or 33. Remote control device 29 then repeatedly transmits a frame of information at block 114, via the wireless transmission 37, containing communication protocol information and other information needed for communication between trainable transceiver 10 and the remote control device 29. Trainable transceiver 10 polls various frequencies at block 116 searching for the carrier frequency of the frame of information transmitted by remote control device 29. After trainable transceiver 10 has found/received the frame of information at block 118, flags are set in software at block 120, indicating that remote control device 29 is present with a specific communications protocol. The communications protocol is set between trainable transceiver 10 and remote control device 29 at block 122 and the training mode will end at block 124. Trainable transceiver 10 will then be placed into an operation mode where it monitors the communication frequency of the remote control device 29 for control commands. Remote control device 29 will operate according to its control function with trainable transceiver 10 receiving the control commands from remote control device 29. Trainable transceiver 10 in this arrangement is a slave device to remote control device 29 and transfers control commands to a serial bus or multiplex bus in the vehicle electrical control infrastructure.

Remote control device 29 may be programmed to transmit multiple control commands to an actuator 11 disposed within the vehicle for controlling the operation of a vehicle feature. For example, the actuator may turn a seat heater on or turn a heat massage device on, but is not limited to such. Remote control device 29 and trainable transceiver 10 have been programmed to transmit and recognize multiple control commands. Trainable transceiver 10 contains memory which is used to interpret the control commands received from remote control device 29. Remote control device 29 has been previously programmed with specific control codes in the factory according to its specified function. In alternate embodiments, remote control device 29 may be programmed by a consumer to transmit any desired control command possible in a vehicle including but not limited to: heat seat "on" and "off", massage unit "on" and "off', and move seat in various positions including fore/aft, recline, etc.

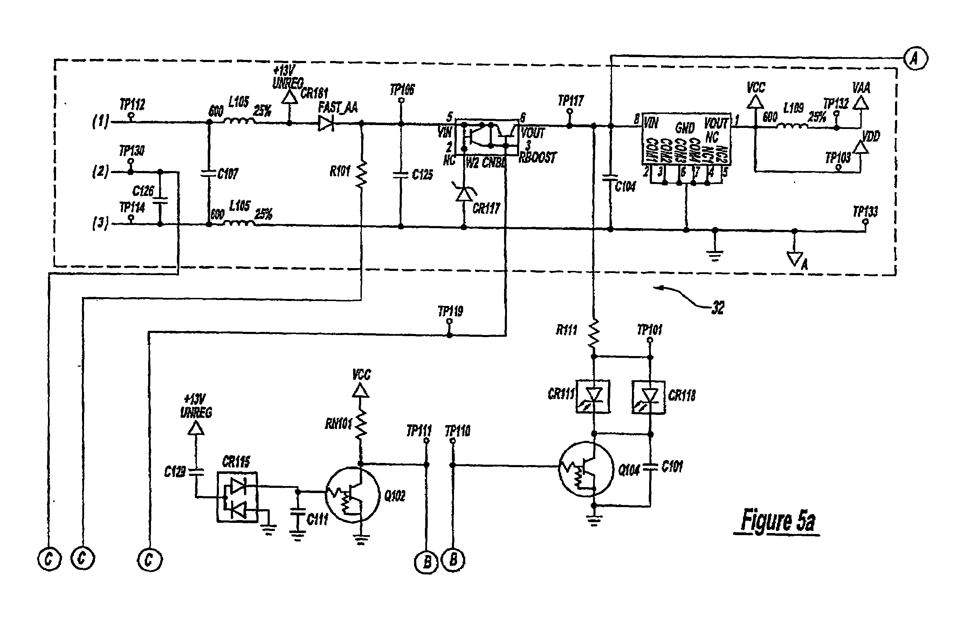

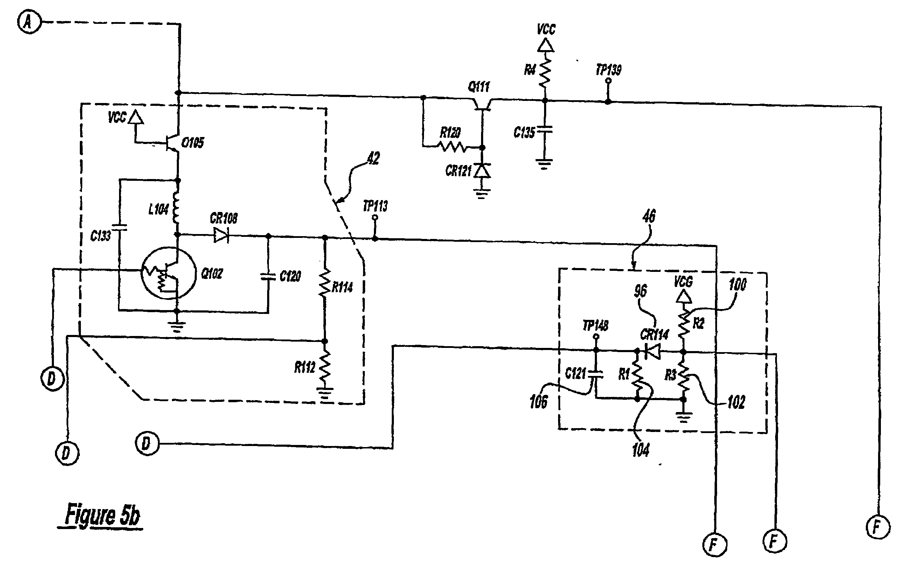

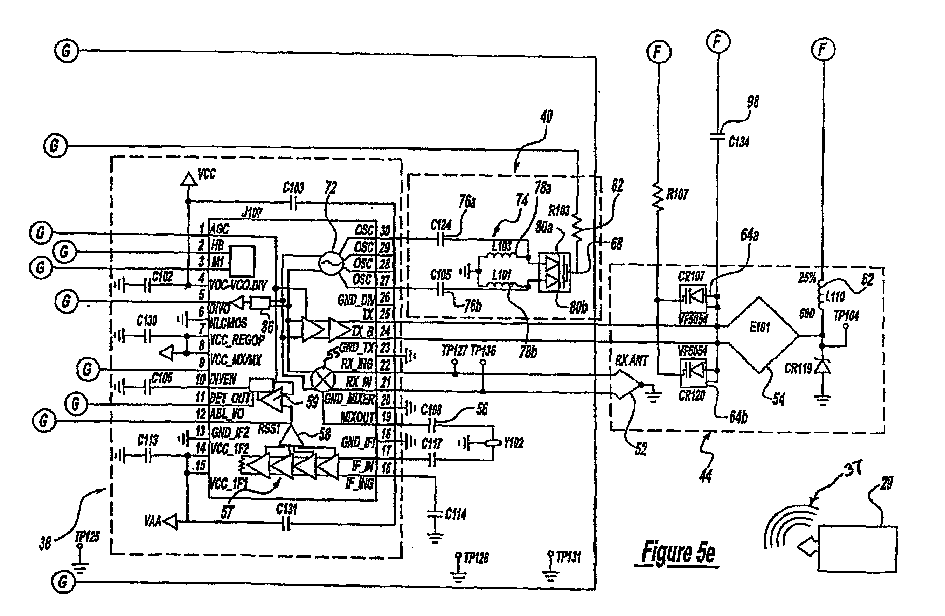

FIGS. 5a - 5e show the electrical circuitry of trainable transceiver 10 in exemplary, schematic form. The electrical circuit schematic may be separated into seven primary components: power circuitry 32; user interface circuitry 34; a controller/microprocessor 36 and its associated circuitry which is used to execute the training; a transceiver applications specific integrated circuit (ASIC) 38 and its associated circuitry; a voltage controlled oscillator (VCO) 40; antenna tuning circuitry 42; a plurality of antennas 44; and power level sense or detector circuitry 46.

Power circuitry 32 (FIG. 5a) is conventionally coupled to the vehicle's battery (not shown) through a connector and is used for supplying the necessary operating power to trainable transceiver 10.

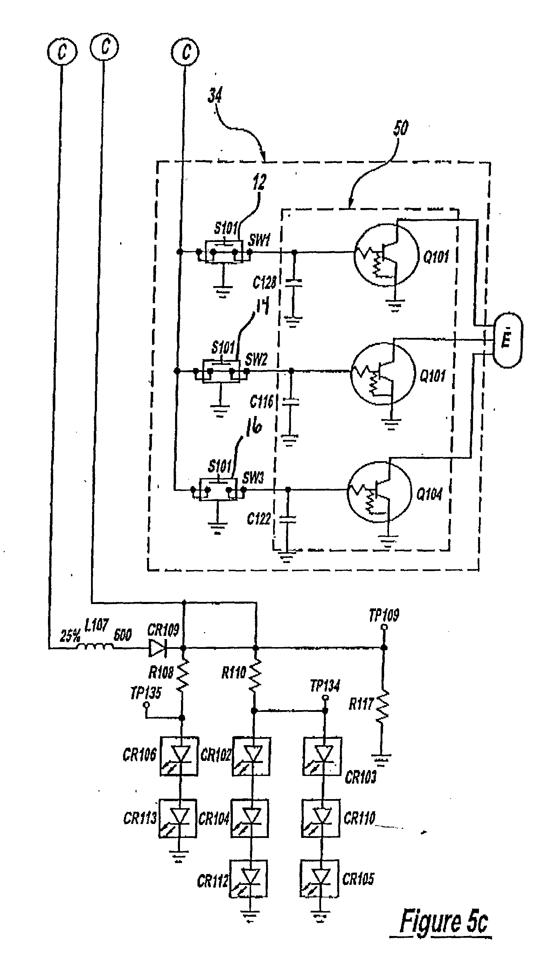

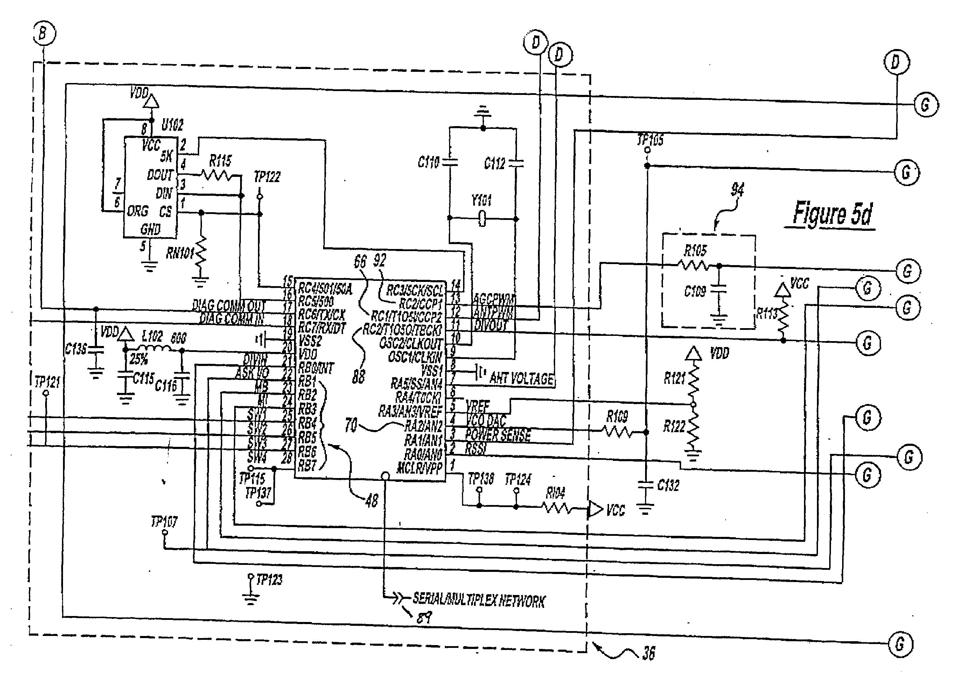

User interface circuitry 34 (FIG. 5c) includes the switches 12, 14, and 16 that are electrically coupled to the data input terminals 48 (FIG. 5d) of the microprocessor 36 through switch interface circuitry 50, including filtering capacitors and sinking transistors. At least one of the switches 12, 14, and 16 is programmed to place the trainable transceiver in a learning or training mode and the switches 12, 14, and 16 may also be depressed for certain specific time periods to execute alternate functions. Multiple switch actuation for specific periods of time may also be used to initiate specific functions in trainable transceiver 10.

Microprocessor 36 (FIG. 5d) is further connected to LED 18 by an output terminal which is illuminated when one of the switches 12, 14, and 16 is closed. Microprocessor 36 is programmed to provide signals to LED 18. LED 18 will be controlled by microprocessor 36 to slowly flash when trainable transceiver 10 enters a training mode. LED 18 will rapidly flash when trainable transceiver 10 is successfully trained, and will slowly flash with a distinctive double blink to prompt the operator to reactuate trainable transceiver 10. LED 18 may be a multi-color LED that changes color to indicate when a channel is successfully trained or to prompt the operator to reactuate the remote transmitter.

Microprocessor 36 includes a communications interface 89 coupled to the control infrastructure (e.g., communications bus, vehicle power, etc.) of the vehicle. Communications interface 89 includes but is not limited to a serial interface, CCD, J1850, CAN, and PALMNET, as discussed previously. Communications interface 89 allows microprocessor 36 to transfer information from transceiver ASIC 38 to the control infrastructure of the vehicle, seamlessly integrating remote control unit 29.

Antennas 44 include a receiving antenna 52 and a transmission antenna 54. Receiving antenna 52 which receives a signal from remote control device 29 or a remote original transmitter (not shown) is coupled to a mixer 55 and a filter 56, which process the received signal. The processed signal is applied to a series of cascaded differential IF amplifiers 57 coupled to a summing amplifier 58 to evaluate the transmission strength of the signal from the original transmitter. The output of summing amplifier 58 is applied to a comparator 59 whose reference voltage is provided by the automatic gain control (AGC) output 92 of microprocessor 36 via a D/A converter 94 (AGC output 92 doubles as the reference voltage for comparator 59 and the control signal to an AGC amplifier 108). If the input of comparator 59 is greater than AGC output 92 of the microprocessor 36, comparator 59 will output a logical one signal. This logical one signal indicates to microprocessor 36 that the power level of the original transmitter is acceptable to attempt to train transceiver 10.

Transmission antenna 54 is preferably a dynamically tunable loop antenna coupled indirectly via a choke 62 to a reference voltage level and coupled to varactor diodes 64a, 64b. Varactor diodes 64a, 64b change the impedance characteristics of transmission antenna 54 in response to a control voltage applied to the cathode of varactor diodes 64a, 64b. The control voltage is determined by microprocessor 36 which provides a pulse width modulated (PWM) signal from a PWM output 66 to antenna tuning circuitry 42 which converts the PWM signal to a control voltage. By using an antenna that is dynamically tuned, one may program microprocessor 36 to selectively adjust the resonance frequency of transmission antenna 54 to maximize its transmission characteristics for each particular frequency at which an RF signal is transmitted.

Coupled to transmission antenna 54 for transmitting an RF signal is transceiver ASIC 38 and VCO 40. VCO 40 has a control input terminal 68 coupled to an output terminal 70 of microprocessor 36 for controlling the frequency output of VCO 40. VCO 40 also includes an oscillator block 72 which outputs a sinusoidal signal and an LC resonator 74.

LC resonator 74 includes coupling capacitors 76a and 76b, inductors 78a and 78b, and varactor diodes 80a and 80b. Coupling capacitor 76a has one terminal connected to oscillator 72 and the other terminal coupled to inductor 78a and the anode of varactor diode 80a. Coupling capacitor 76b has one terminal connected to oscillator 72 and the other terminal coupled to both inductor 78b and the anode of varactor diode 80b. Capacitors 76a, 76b, inductors 78a, 78b, and varactor diodes 80a, 80b form a resonating LC circuit having a variable resonant frequency that is changed by varying the voltage to the cathodes of varactor diodes 80a, 80b. This voltage is varied through the control input terminal 68 and a resistor 82 from the output terminal 70 of microprocessor 36. Microprocessor 36 controls the voltage applied to control input terminal 68.

A feedback loop may be incorporated into the control of VCO 40 wherein the oscillation frequency is monitored by the microprocessor 36 which adjusts the voltage at control input terminal 68 to generate the desired oscillation frequency (frequency synthesizer control). The feedback is provided by a prescaler 86 coupled to an input 88 on microprocessor 36 which measures the frequency of VCO 40 output signal.

The power level sense or detector circuitry 46 of transceiver 10 provides frequency and amplitude tuning feedback for the transmission antenna 54. Detector 46 comprises a Schottky diode 96 and bias components, including a capacitor 98, functioning as a high pass filter, a resistor 100 tied to a voltage source (VCC), a resistor 102, a resistor 104, and a capacitor 106, functioning as a low pass filter. This detector circuitry 46 provides a DC voltage proportional to the RF voltage or power level on the transmission antenna 54. As the transmission antenna 54 is tuned toward resonance, the detector circuitry 46 DC output voltage rises until resonance is reached and then begins to drop again past resonance. Microprocessor 36 is programmed with algorithms which tune transmission antenna 54 via varactor diodes 80a, 80b exactly to the peak resonance.

It is to be understood that the invention is not limited to the exact construction illustrated and described above, but that various changes and modifications may be made without departing from the scope of the invention. Accordingly, the present invention is not limited to a particular embodiment, but extends to various modifications that nevertheless fall within the scope of the appended claims.

## Claims

1. A receiver for use in a vehicle for communicating between an actuator disposed within the vehicle for controlling the operation of a vehicle feature and a remote device, the receiver comprising:
an antenna for receiving a wireless signal, the wireless signal generated by the remote device and including a control command;
a controller coupled to said antenna;
wherein the controller is configured to enter a training mode of operation wherein the controller polls a plurality of wireless frequencies to detect the wireless signal, wherein the controller is configured to receive and interpret the control command on the wireless signal and to communicate the control command to the actuator for execution.

2. The receiver of Claim 1, wherein the receiver is configured for wireless transmission.

3. The receiver of Claim 1, wherein the remote device is substantially free of wiring to a vehicle control bus.

4. The receiver of Claim 1, wherein the antenna is a dynamically tunable antenna.

5. The receiver of Claim 1, wherein the actuator is a seat heater controlled by said remote device.

6. The receiver of Claim 1, wherein the controller is electrically coupled to the actuator via a bus.

7. The receiver of Claim 6, wherein the bus includes a multiplexed automotive instrumentation network.

8. The receiver of Claim 7, wherein said multiplexed automotive instrumentation network operates under the J1850 standard.

9. The receiver of Claim 1, wherein said receiver and said remote control device communicate in the frequency range of 900 MHz to 1000 MHz.

10. A method of controlling an actuator within a vehicle with an RF signal from a remote device, the RF signal having a control command, the method comprising:
polling a plurality of frequencies to locate a frequency of the RF signal;
receiving the control command from the remote control device via the RF signal; and
providing the control command to the actuator disposed within the vehicle for controlling the operation of a vehicle feature.

11. The method of Claim 10, wherein the control command is a vehicle seat control command.

12. The method of Claim 10, wherein the step of providing the control commands includes providing the control commands over a bus to the actuator.

13. The method of Claim 12, wherein the bus is an automotive multiplex network.

14. An RF control system in a vehicle comprising:
a trainable transceiver including memory, the memory storing at least one communication protocol, and a communications interface to a control bus in the vehicle;
an antenna electrically coupled to said trainable transceiver;
a remote device generating an RF signal, the trainable transceiver configured to receive the RF signal;
wherein the trainable transceiver enters a training mode of operation wherein the receiver polls a plurality of RF frequencies to detect the RF signal and establish communications with the remote device, and
wherein said trainable transceiver receives a control command from said remote device, via the RF signal, and transfers the control command to the control bus of the vehicle to be executed.

15. The RF control system of Claim 14, wherein the trainable transceiver includes transmission capabilities.

16. The RF control system of Claim 14, wherein the remote device is free of wiring to the control bus and mounted to the vehicle interior.

17. The RF control system of Claim 14, wherein the control bus is coupled to a seat heater, the control commands actuating the seat heater.

18. The RF control system of Claim 14, wherein the control bus of the vehicle includes a multiplexed automotive instrumentation network.

19. The RF control system of Claim 18, wherein the multiplexed automotive instrumentation network operates under the J1850 standard.

20. The RF control system of Claim 14, wherein the trainable transceiver and the remote control device communicate in the frequency range of 900 MHz to 1000 MHz.
